# EUROPÄISCHE PATENTSCHRIFT

(11) **EP 2 875 567 B1**
(45) Veröffentlichungstag und Bekanntmachung des Hinweises auf die Patenterteilung: **28.12.2016**
(21) Anmeldenummer: 13732095.8
(22) Anmeldetag: 21.06.2013
(51) Int. Cl.: H02K 5/14, H02K 19/36

(54) **ELEKTRISCHE MASCHINE UND KRAFTFAHRZEUG MIT EINER DERARTIGEN ELEKTRISCHEN MASCHINE**
ELECTRICAL MACHINE AND AUTOMOTIVE VEHICLE WITH SUCH MACHINE
MACHINE ELECTRIQUE ET VEHICULE AUTOMOBILE A TELLE MACHINE

(30) Priorität: 21.07.2012 DE 102012014453
(43) Veröffentlichungstag der Anmeldung: 27.05.2015
(73) Patentinhaber: Audi AG, 85045 Ingolstadt (DE)
(72) Erfinder: WILDGRUBER, Mario, 85296 Rohrbach (DE)
(74) Vertreter: Herbst, Matthias Heinz
(86) Internationale Anmeldenummer: PCT/EP2013/001839
(87) Internationale Veröffentlichungsnummer: WO 2014/015929

(56) Entgegenhaltungen:
- DE-A1- 10 314 485
- US-A1- 2008 309 181

## Beschreibung

Die Erfindung betrifft eine elektrische Maschine, mit einem Gehäuse, einem Regler zum Beeinflussen eines Erregerstroms für die elektrische Maschine und einem separat vom Regler ausgebildeten Träger für an Schleifringen einer Rotorwelle der elektrischen Maschine radial zur Drehachse der Rotorwelle anliegende, axial nebeneinander und parallel zueinander angeordnete Kohlebürsten.

Kraftfahrzeuge weisen als Generator eingesetzte fremderregte elektrische Maschinen auf, um elektrischen Strom für das Bordnetz zu liefern und die Batterie als Energiespeicher ausreichend zu laden. Herkömmliche elektrische Maschinen umfassen einen Regler, der als integrierter Schaltkreis (IC) ausgebildet ist und einen veränderlichen Erregerstrom auf eine Erregerwicklung des Generators überträgt. Der Erregerstrom ist abhängig von der Bordnetzlast und der aktuellen Drehzahl der elektrischen Maschine. Die Übertragung auf die Erregerwicklung erfolgt über Kohlebürsten, die an Schleifringen einer Rotorwelle anliegen, es handelt sich um eine fremderregte Synchronmaschine. Mittels des Reglers wird die in den Wicklungen induzierte Spannung und somit die Leistungsabgabe geregelt.

Die DE 103 14 485 A1 offenbart eine Vorrichtung für einen Elektromotor, die wenigstens eine erste Kontaktschiene, insbesondere für eine drehbare Bürstenplatte, aufweist. Die erste Kontaktschiene ist unmittelbar am Elektromotorgehäuse befestigt.

Die US 2008/0309181 A1 schlägt einen Generator für ein Kraftfahrzeug mit einem Bürstenhalter für Schleifringe vor. Die Bürsten liegen jeweils radial an einer Motorwelle an und sind axial nebeneinander und parallel zueinander angeordnet.

Es sind als Generator eingesetzte elektrische Maschinen bekannt, bei denen die Kohlebürsten gemeinsam mit dem Regler-IC in einem einzigen Bauteil integriert sind. Nachteilig ist dabei jedoch, dass bei einem verschleißbedingten Austausch der Kohlebürsten das gesamte, auch den Regler umfassende Modul getauscht werden muss.

Es ist daher bereits vorgeschlagen worden, den Regler-IC mit einem separaten Gehäuse zu versehen und einen Träger für die Kohlebürsten separat am Generatorgehäuse anzubringen.

Der begrenzte Einbauraum für die elektrische Maschine führt häufig wegen der großen Modellvielfalt und der Anzahl der angebotenen Motoren zu Platzproblemen. Um die Herstellung teurer Werkzeuge zu vermeiden, werden die Kohlebürsten teilweise hängend eingebaut, das heißt sie befinden sich unterhalb der Rotorwelle. Allerdings besteht bei hängenden Kohlebürsten bei Wasserbeaufschlagung die Gefahr, dass Wasser in den Schleifringraum eintritt oder in den Kohlebürstenschacht fließt, was in der Folge zum Ausfall des Generators und zu einem Fahrzeugdefekt führen kann. Um diesen Nachteil zu vermeiden, muss das Gehäuse der elektrischen Maschine bzw. deren rückseitiger Lagerschild neu konstruiert werden, wodurch sich die Kosten erhöhen.

Der Erfindung liegt daher die Aufgabe zugrunde, eine elektrische Maschine anzugeben, bei der die Position der Kohlebürsten flexibel in Abhängigkeit des zur Verfügung stehenden Bauraums gewählt werden kann.

Zur Lösung dieser Aufgabe ist bei einer elektrischen Maschine der eingangs genannten Art erfindungsgemäß vorgesehen, dass das Gehäuse an einer Außenseite mehrere paarweise einander zugeordnete elektrische Kontaktpunkte für den Träger aufweist, die eine Befestigung des Trägers an einer von mehreren unterschiedlichen Positionen unabhängig von der Lage des Reglers ermöglichen, wobei die paarweise einander zugeordneten Kontaktpunkte auf Kreisen oder Kreissegmenten, mit der Drehachse der Rotorwelle als Mittelpunkt, angeordnet sind.

Die Erfindung beruht auf der Erkenntnis, dass der Träger für die Kohlebürsten in eine optimale "stehende" Position gedreht bzw. an dieser Position befestigt werden kann, sofern jeweils passende elektrische Kontaktpunkte vorhanden sind. Mittels dieser Kontaktpunkte ist eine Anpassung der Befestigungsposition des Trägers für die Kohlebürsten in Abhängigkeit der jeweiligen Einbauverhältnisse möglich. Da mehrere Paare von möglichen Kontaktpunkten vorgesehen sind, kann eine Veränderung einer Einbausituation vorgenommen werden, ohne dass irgendwelche konstruktiven Änderungen an der Außenseite des Gehäuses oder einem Lagerschild der elektrischen Maschine erforderlich wären.

Eine noch bessere Anpassung an unterschiedliche Einbausituationen ergibt sich da die paarweise einander zugeordneten Kontaktpunkte auf Kreisen oder Kreissegmenten angeordnet sind. Da die Kohlebürsten, die in dem Träger gehalten sind, mit ihrem freien Ende die Rotorwelle berühren, sind die Paare der Kontaktpunkte auf Kreisen oder Kreissegmenten angeordnet , die um die Drehachse der Rotorwelle herum angeordnet sind.

Vorzugsweise können die Kontaktpunkte auf zwei konzentrischen Kreisen oder Kreissegmenten angeordnet sein, wobei ein erster Kontaktpunkt auf einem ersten Kreis oder einem ersten Kreissegment und ein zweiter Kontaktpunkt auf einem zweiten Kreis oder einem zweiten Kreissegment angeordnet ist.

Es liegt auch im Rahmen der Erfindung, dass die Kreise oder Kreissegmente als Leiterbahnen ausgebildet sind. Bei dieser Variante kann der Träger an einer beliebigen Position entlang der Leiterbahn angeordnet sein, das heißt, es sind keine definierten Kontaktpunkte vorgesehen. Alternativ oder zusätzlich können jedoch auch festgelegte Kontaktpunkte vorgesehen sein, die vorzugsweise in festgelegten Winkelabständen angeordnet sein können.

Um die Montage des Trägers zu erleichtern, kann es bei der erfindungsgemäßen elektrischen Maschine vorgesehen sein, dass an wenigstens einer Befestigungsposition für den Träger mechanische Befestigungsmittel angeordnet sind. Die mechanischen Befestigungsmittel erlauben eine einfache und schnelle Befestigung des Trägers an dem Gehäuse oder einem Lagerschild, vorzugsweise wird beim Befestigen automatisch der elektrische Kontakt hergestellt. Die elektrischen Kontaktpunkte für den Träger sind über Leitungen oder Leiterbahnen, die am oder im Gehäuse angeordnet sind, mit dem Regler verbunden. Der Regler weist den integrierten Schaltkreis (IC) auf, der den benötigten Erregerstrom vorgibt, zusätzlich erfolgt mittels des Reglers die Kommunikation mit anderen Komponenten des Bordnetzes.

Die erwähnten mechanischen Befestigungsmittel können als an der Außenseite des Gehäuses oder am Lagerschild angebrachte Innengewinde ausgebildet sein, in die Befestigungsschrauben für den Träger einschraubbar oder eingeschraubt sind. Ein Träger kann somit einfach mittels einer Befestigungsschraube an dem Gehäuse oder an einem Lagerschild befestigt werden. Die Verwendung eines Innengewindes ist lediglich beispielhaft zu verstehen, alternativ können natürlich auch ein ein Außengewinde aufweisender Bolzen oder Kontaktpunkte vorgesehen sein, die eine Befestigung des Trägers durch Löten oder Schweißen ermöglichen.

Eine alternative Ausgestaltung der erfindungsgemäßen elektrischen Maschine sieht vor, dass die mechanischen Befestigungsmittel als Steckverbindungen ausgebildet sind, die mit Steckverbindungen des Trägers verrastbar oder verrastet sind.

Es liegt auch im Rahmen der Erfindung, dass bei der erfindungsgemäßen elektrischen Maschine der Träger so an dem Gehäuse angeordnet ist, dass die Kohlebürsten im eingebauten Zustand auf der Höhe der Rotorwelle oder oberhalb davon angeordnet sind. Durch diese stehende Befestigung wird ein Eindringen von Wasser oder Schmutz in den Träger weitestgehend vermieden, wodurch eine hohe Betriebssicherheit erhalten wird.

Vorzugsweise ist die elektrische Maschine als Generator für ein Kraftfahrzeug ausgebildet.

Daneben betrifft die Erfindung ein Kraftfahrzeug. Das erfindungsgemäße Kraftfahrzeug ist dadurch gekennzeichnet, dass es wenigstens eine elektrische Maschine der beschriebenen Art aufweist.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellungen und zeigen:
- Fig. 1: eine Seitenansicht einer erfindungsgemäßen elektrischen Maschine;
- Fig. 2: eine Prinzipskizze eines Ausführungsbeispiels einer erfindungsgemäßen elektrischen Maschine;
- Fig. 3: die in Fig. 2 gezeigte elektrische Maschine mit einem an einer anderen Position angebrachten Träger für Kohlebürsten;
- Fig. 4: ein weiteres Ausführungsbeispiel einer erfindungsgemäßen elektrischen Maschine; und
- Fig. 5: ein weiteres Ausführungsbeispiel einer erfindungsgemäßen elektrischen Maschine.

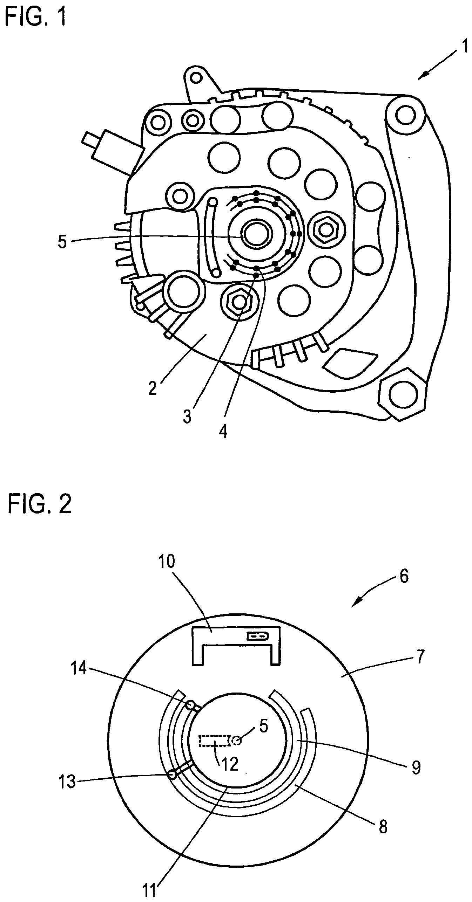

Fig. 1 ist eine Seitenansicht einer elektrischen Maschine 1, die als Generator eines Kraftfahrzeugs ausgebildet ist. An der Außenseite des Gehäuses 2 sind mehrere paarweise einander zugeordnete elektrische Kontaktpunkte 3, 4 angeordnet. In Fig. 1 erkennt man, dass sowohl die äußeren Kontaktpunkte 3 als auch die inneren Kontaktpunkte 4 auf einer kreissegmentförmigen Bahn angeordnet sind. Zur Vereinfachung der Darstellung sind die Kontaktpunkte 3, 4 lediglich als Kreise dargestellt, jeder Kontaktpunkt kann jedoch auch als Innengewinde ausgebildet sein bzw. ein Innengewinde aufweisen. Zwei einander zugeordnete Kontaktpunkte 3, 4 sind elektrisch voneinander isoliert.

An den Kontaktpunkten 3, 4 wird ein Träger (nicht gezeigt) mit den beiden Kohlebürsten angebracht, die radial an der Rotorwelle 5 der elektrischen Maschine 1 anliegen. Die Rotorwelle 5 weist Schleifringe auf, um auf diese Weise die Erregerwicklungen der elektrischen Maschine 1 mit dem benötigten Erregerstrom zu versorgen.

Aus Gründen der Übersichtlichkeit ist der Regler in Fig. 1 nicht eingezeichnet, der stets an der gleichen Stelle befestigt ist.

Fig. 2 zeigt schematisch eine Seitenansicht eines zweiten Ausführungsbeispiels einer elektrischen Maschine 6, an deren Außenseite 7 Leiterbahnen 8, 9 angeordnet sind. Die Leiterbahnen 8, 9 sind als konzentrische Kreissegmente mit mehreren Befestigungspunkten ausgebildet. Die Leiterbahnen 8, 9 sind über nicht näher dargestellte Leiterbahnen mit einem Regler 10 verbunden, der ebenfalls an der Außenseite 7 der elektrischen Maschine 6 angeordnet ist. Der Regler 10 weist einen integrierten Schaltkreis auf, der den Reglerstrom beeinflusst und die Kommunikation mit anderen Bestandteilen des Bordnetzes übernimmt.

Ein Träger 11, in dem die Kohlebürsten 12 aufgenommen sind, ist an der Außenseite 7 so befestigt, dass seine Kontakte 13, 14 die erste Leiterbahn 8 bzw. die zweite Leiterbahn 9 berühren. Die Leiterbahnen 8, 9 sind über nicht näher dargestellte Leitungsverbindungen mit dem Regler 10 verbunden. Der Träger 11 kann unabhängig von dem fest installierten Regler 10 über einen weiten Winkelbereich in verschiedenen Winkelpositionen befestigt werden. In Abhängigkeit von einer bestimmten Einbauposition kann jeweils eine optimale Position für den Träger 11 gefunden werden, bei der die Kohlebürsten 12 so angeordnet sind, dass die Gefahr von Verschmutzungen gering ist. In dem in Fig. 2 dargestellten Ausführungsbeispiel befinden sich die Kohlebürsten 12 in einer waagerechten Position.

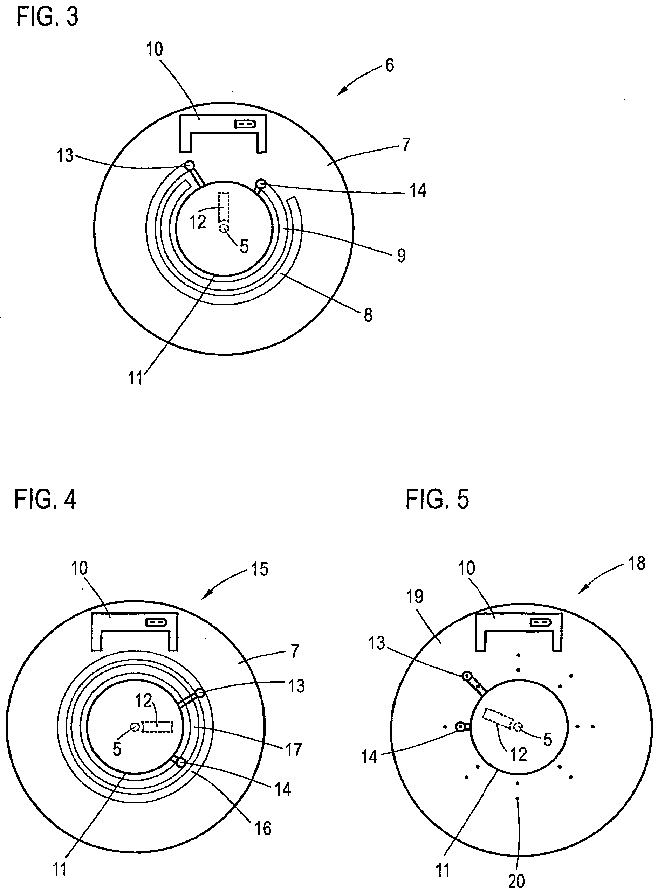

Fig. 3 zeigt die elektrische Maschine 6 von Fig. 2, bei der der Träger 11 in einer anderen Position angebracht ist. In Fig. 3 ist der Träger 11 so angeordnet, dass die Kohlebürsten 12 senkrecht stehen, dementsprechend kann kein Wasser in den Kohlenschacht im Träger 11 eindringen. Da die Kontakte 13, 14 die Leiterbahnen 8, 9 berühren, ist auch hier eine Verbindung zwischen den Kohlebürsten 12 über die Leiterbahnen 8, 9 zum Regler 10 vorhanden.

Fig. 4 zeigt ein weiteres Ausführungsbeispiel einer elektrischen Maschine 15, bei der Leiterbahnen 16, 17 als Kreise ausgebildet sind. Diese Ausführung weist den Vorteil auf, dass der Träger 11 in einer beliebigen Position, stufenlos positioniert werden kann.

Fig. 5 zeigt ein weiteres Ausführungsbeispiel einer elektrischen Maschine 18, auf deren Außenseite 19 Kontaktpunkte 20 angeordnet sind. Die Kontaktpunkte 20 sind jeweils 45° voneinander entfernt, so dass insgesamt acht unterschiedliche Befestigungsmöglichkeiten für den Träger 11 bestehen. Die einzelnen Kontaktpunkte 20 sind als Innengewinde beziehungsweise Sacklöcher ausgebildet, so dass der Träger 11 mit seinen Kontakten 13, 14 mit den Kontaktpunkten 20 verschraubt werden kann.

## Patentansprüche

1. Elektrische Maschine, mit einem Gehäuse, einem Regler zum Beeinflussen eines Erregerstroms für die elektrische Maschine und einem separat vom Regler ausgebildeten Träger für an Schleifringen einer Rotorwelle der elektrischen Maschine radial zur Drehachse der Rotorwelle anliegende, axial nebeneinander und parallel zueinander angeordnete Kohlebürsten,
**dadurch gekennzeichnet,**
**dass** das Gehäuse (2) an einer Außenseite (7) mehrere paarweise einander zugeordnete elektrische Kontaktpunkte (3, 4, 20) für den Träger (11) aufweist, die eine Befestigung des Trägers (11) an einer von mehreren unterschiedlichen Positionen unabhängig von der Lage des Reglers (10) ermöglichen, wobei die paarweise einander zugeordneten Kontaktpunkte (3, 4, 20) auf Kreisen oder Kreissegmenten, mit der Drehachse der Rotorwelle (5) als Mittelpunkt, angeordnet sind-.

2. Elektrische Maschine nach Anspruch 1 -,
**dadurch gekennzeichnet,**
**dass** die Kontaktpunkte (3, 4, 20) auf zwei konzentrischen Kreisen oder Kreissegmenten angeordnet sind.

3. Elektrische Maschine nach Anspruch 1 oder 2,
**dadurch gekennzeichnet,**
**dass** die Kreise oder Kreissegmente als Leiterbahnen (8, 9) ausgebildet sind.

4. Elektrische Maschine nach einem der vorangehenden Ansprüche,
**dadurch gekennzeichnet,**
**dass** an wenigstens einer Befestigungsposition für den Träger (11) mechanische Befestigungsmittel angeordnet sind.

5. Elektrische Maschine nach Anspruch 4,
**dadurch gekennzeichnet,**
**dass** die mechanischen Befestigungsmittel als im Gehäuse (2) angeordnete Innengewinde ausgebildet sind, in die Befestigungsschrauben für den Träger (11) einschraubbar oder eingeschraubt sind.

6. Elektrische Maschine nach Anspruch 4,
**dadurch gekennzeichnet,**
**dass** die mechanischen Befestigungsmittel als Steckverbindungen ausgebildet sind, die mit Steckverbindungen des Trägers verrastbar oder verrastet sind.

7. Elektrische Maschine nach einem der vorangehenden Ansprüche,
**dadurch gekennzeichnet,**
**dass** der Träger (11) so an dem Gehäuse (2) angeordnet ist, dass die Kohlebürsten (12) im eingebauten Zustand auf der Höhe der Rotorwelle (5) oder oberhalb davon angeordnet sind.

8. Elektrische Maschine nach einem der vorangehenden Ansprüche,
**dadurch gekennzeichnet,**
**dass** sie als Generator, Motor oder Lüftermotor für ein Kraftfahrzeug ausgebildet ist.

9. Kraftfahrzeug,
**dadurch gekennzeichnet,**
**dass** es wenigstens eine elektrische Maschine (1, 6, 15, 18) nach einem der Ansprüche 1 bis 8 aufweist.

## Claims

1. Electric machine, having a housing, a controller for influencing an excitation current for the electric machine, and a support designed separately from the controller for carbon brushes arranged radially adjacent to the rotation axis of the rotor shaft, axially side by side and parallel to each other on slip rings of a rotor shaft of the electric machine,
**characterised in that**
the housing (2) has, on an outer side (7), several electrical contact points (3, 4, 20) for the support (11) associated with each other in pairs which enable the support (11) to be fastened at one of several different positions regardless of the location of the controller (10), wherein the contact points (3, 4, 20) associated with each other in pairs are arranged on circles or circle segments with the rotation axis (5) as the centre.

2. Electric machine according to claim 1,
**characterised in that**
the contact points (3, 4, 20) are arranged on two concentric circles or circle segments.

3. Electric machine according to claim 1 or 2,
**characterised in that**
the circles or circle segments are designed as conducting tracks (8, 9).

4. Electric machine according to one of the preceding claims,
**characterised in that**
mechanical fastening means are arranged at at least one fixing position for the support (11).

5. Electric machine according to claim 4,
**characterised in that** the mechanical fastening means are designed as an internal thread arranged in the housing (2) into which fastening screws for the support (11) can be screwed or are screwed.

6. Electric machine according to claim 4,
**characterised in that**
the mechanical fastening means are designed as connectors which can be interlocked or are interlocked with connectors of the support.

7. Electric machine according to any one of the preceding claims,
**characterised in that**
the support (11) is arranged at the housing (2) so that, in the installed state, the carbon brushes (12) are arranged at the height of the rotor shaft (5) or above it.

8. Electric machine according to any one of the preceding claims,
**characterised in that**
it is designed as a generator, motor or fan motor for a motor vehicle.

9. Motor vehicle,
**characterised in that**
it has at least one electric machine (1, 6, 15, 18) according to any one of claims 1 to 8.

## Revendications

1. Machine électrique, comprenant un boîtier, un régulateur pour influencer un courant d'excitation pour la machine électrique et un support, réalisé séparément du régulateur, pour des balais de charbon reposant de manière radiale par rapport à l'axe de rotation d'un arbre de rotor au niveau de bagues collectrices de l'arbre de rotor de la machine électrique, disposés les uns à côté des autres de manière axiale et de manière parallèle les uns par rapport aux autres,
**caractérisée en ce**
**que** le boîtier (2) présente, au niveau d'un côté extérieur (7), plusieurs points de contact (3, 4, 20) électriques, associés deux par deux, pour le support (11), lesquels points de contact permettent une fixation du support (11) en une position parmi plusieurs positions différentes en fonction de la position du régulateur (10), les points de contact (3, 4, 20) associés deux par deux étant disposés sur des cercles ou des segments de cercles avec l'axe de rotation de l'arbre de rotor (5) comme centre.

2. Machine électrique selon la revendication 1,
**caractérisée en ce**
**que** les points de contact (3, 4, 20) sont disposés sur deux cercles concentriques ou segments de cercles concentriques.

3. Machine électrique selon la revendication 1 ou 2,
**caractérisée en ce**
**que** les cercles ou segments de cercles sont réalisés sous la forme de pistes conductrices (8, 9).

4. Machine électrique selon l'une quelconque des revendications précédentes,
**caractérisée en ce**
**que** des moyens de fixation mécaniques sont disposés en au moins une position de fixation pour le support (11).

5. Machine électrique selon la revendication 4,
**caractérisée en ce**
**que** les moyens de fixation mécaniques sont réalisés sous la forme de filetages intérieurs disposés dans le boîtier (2), dans lesquels peuvent être vissées ou sont vissées des vis de fixation pour le support (11).

6. Machine électrique selon la revendication 4,
**caractérisée en ce**
**que** les moyens de fixation mécaniques sont réalisés sous la forme de systèmes d'assemblage par enfichage, qui peuvent être enclenchés ou sont enclenchés avec des systèmes d'assemblage par enfichage du support.

7. Machine électrique selon l'une quelconque des revendications précédentes,
**caractérisée en ce**
**que** le support (11) est disposé de telle sorte au niveau du boîtier (2) que les balais de charbon (12) sont disposés, dans l'état monté, à la hauteur de l'arbre de rotor (5) ou au-dessus.

8. Machine électrique selon l'une quelconque des revendications précédentes,
**caractérisée en ce**
**qu'**elle est réalisée sous la forme d'un générateur, d'un moteur ou d'un moteur à ventilateur pour un véhicule automobile.

9. Véhicule automobile,
**caractérisé en ce**
**qu'**il présente au moins une machine électrique (1, 6, 15, 18) selon l'une quelconque des revendications 1 à 8.
